# EUROPEAN PATENT APPLICATION

(11) **EP 0 993 189 A2**
(43) Date of publication of application: **12.04.2000**
(21) Application number: 99119630.4
(22) Date of filing: 04.10.1999
(51) Int. Cl.: H04N 5/781, H04N 5/783

(54) **Audio video recording and reproducing system**

(30) Priority: 05.10.1998 JP 28184698
(71) Applicant: Matsushita Electric Industrial Co., Ltd., Kadoma-shi, Osaka 571-8501 (JP)
(72) Inventor: Mino, Mineo, Osaka 573-0071 (JP); Mizukawa, Yousuke, Osaka 576-0054 (JP); Yoshiura, Tsukasa, Osaka 573-113-1113 (JP)
(74) Representative: Grünecker, Kinkeldey, Stockmair & Schwanhäusser Anwaltssozietät

(57) **Abstract**

The present invention provides an audio video recording and reproducing system that does not only enable a noiseless reproduced image or a noiseless still image in an arbitrary place to be viewed even during special reproduction at an arbitrary speed but that also significantly increases the speed at which to access a desired position to enable the signal for the desired position to be easily and speedily searched for for reproduction. Sounds and videos from a digital VCR (500) are digitally recorded on and reproduced from a hard disc (100) in a hard disc apparatus (H1), and the reproduced information is recorded on the digital VCR (500), while an image is reproduced by a monitor TV (504). All or part of an AV/subcode digital stream signal for the sounds and videos is continuously recorded within a predetermined range of the hard disc (100) from a disc interface device (107). Then, an operation control input device (S1) is used to change the settings of the movement speed and stationary position of a transducer (122) which settings are used during tracing. An AV/subcode digital stream signal reproduced by the transducer (122) is transmitted to the digital VCR (500) through the disc interface device (107), and the resulting analog audio video signal is applied to the monitor TV (504).

## Description

### Field of the Invention

The present invention relates to an audio video recording and reproducing system for digitally recording and reproducing on a memory disc such as a hard disc that is a recording medium audio and video information from a video cassette recorder is recorded and for reproducing an image based on reproducing information.

### Background of the Invention

Analog or digital video cassette recorders (VCR) generally used at home are conventionally used to record and reproduce audio and video signals based on audio and video information. Such a VCR uses as a reproduction method, normal reproduction in a normal direction at a normal speed and in some cases, requires reproduction at speeds different from that of the normal reproduction (for example, fast forward, slow, and frame feed) in a forward or backward direction. Special reproduction including such a reproduction method is sometimes carried out in a forward or backward direction at an arbitrary speed.

Reproduction using such a conventional VCR has several problems; first, during the use as a reproduction method of special reproduction using a speed and direction different from those of the normal reproduction, noise having no signal may occur anywhere in a reproduced image or another image may be fitted in the reproduced image, thereby making the reproduced image very indistinct.

Second, a desired position cannot be found easily and the access speed is very low, thereby requiring a very large amount of time to find the desired position to reproduce it so that the reproduced image can be viewed.

The present invention solves these conventional problems, and provides an audio video recording and reproducing system that does not only enable a noiseless reproduced image or a noiseless still image in an arbitrary place to be viewed even during special reproduction at an arbitrary speed but also significantly increases the speed enough to access a desired position to enable the signal for the desired position to be easily and speedily searched for for reproduction.

### Summary of the Invention

In order to attain the above described object, an audio video recording and reproducing system according to this invention digitally records and reproduces audio and video information from a video cassette recorder connected to a memory disc apparatus, on and from a memory disc provided in the memory disc apparatus. The audio video recording and reproducing system then records the reproduced information on the video cassette recorder, which then reproduces an image. That is, the system records all or part of an AV/subcode digital stream signal based on the audio and video information, within a predetermined range of the memory disc through disc interface means. The present invention is characterized in that subsequently, operation control input means is used to change the settings of the movement speed and stationary position of the transducer which settings are used during tracing so that an AV/subcode digital stream signal reproduced from the memory disc by the transducer can be transmitted through the disc interface means to the video cassette recorder for recording, while an analog audio video signal is applied to a monitor TV. This configuration does not only enable a noiseless reproduced image or a noiseless still image in an arbitrary place to be viewed even during special reproduction at an arbitrary speed but also significantly increases the speed enough to access a desired position to enable the signal for the desired position to be easily and speedily searched for for reproduction.

The present invention will be described below in more detail based on the claims. The audio video recording and reproducing system according to the present invention comprises a memory disc apparatus having a memory disc that is a recording medium and a video cassette recorder connected to the memory disc apparatus, and digitally records and reproduces audio and video information from the video cassette recorder on and from the memory disc. The audio video recording and reproducing system then records the reproduced information on the video cassette recorder, which then reproduces an image.

An audio video recording and reproducing system according to a first aspect of the present invention uses as the video cassette recorder, a digital VCR that digitally records and reproduces a digital stream signal corresponding to audio and video information and that is connected to the memory disc apparatus via a single stream bus standardized as a bus for digital stream signals.

The digital VCR comprises a bus interface capable of using a specified method to input to and output from the stream bus all data corresponding to an AV/subcode digital stream signal as said digital stream signal consisting of DVC compressed audio and video digital stream signals output from the digital VCR and a subcode digital stream signal including a time code and also corresponding to a control signal consisting of a command for controlling the digital VCR and a status signal for the digital VCR, and also comprises bus interface circuit for data input and output carried out by the bus interface.

The memory disc apparatus comprises a transducer for recording and reproducing an AV/subcode digital stream signal and a control signal on and from the memory disc, an actuator for allowing the transducer to trace tracks on the memory disc for recording or reproduction, transducer control means for controlling the movement speed and stationary position of the transducer while the actuator is allowing the transducer to execute tracing, operation control input means for setting and inputting the movement speed and stationary position of the transducer to the transducer control means, bus interface means directly connected to the stream bus for using the specified method to input to and output from the stream bus all data corresponding to an AV/subcode digital stream signal and a control signal, disc interface means capable of allowing the transducer to divide into sectors formed on tracks, all data corresponding to an AV/subcode digital stream signal and a control signal from the bus interface means to continuously record or reproduce this data on or from the memory disc in the units of video signal frames, and interface control means for operating and controlling the bus and disc interface means using a control signal.

The interface control means controls and operates the digital VCR and the memory disc apparatus to continuously records all or part of an AV/subcode digital stream signal from the digital VCR within a predetermined range of the memory disc through the stream bus and the bus and disc interface means. Then, the operation control input means is used to change the settings of the movement speed and stationary position of the transducer which settings are used during the tracing of the memory disc. The transducer control means controls the transducer to reproduce the memory disc in order to transmit the resulting AV/subcode digital stream signal through the disc and bus interface means and stream bus to the digital VCR, where the signal is recorded. A VCR codec that is a decoder provided in the digital VCR decodes the AV/subcode digital stream signal to convert it into an analog audio video signal, and applies this analog audio video signal to a monitor TV to obtain an image at an arbitrary speed and a still image at an arbitrary position of the memory disc.

An audio video recording and reproducing system according to a second aspect of the present invention is essentially configured so that as a video cassette recorder, the first audio video recording and reproducing system comprises an analog VCR in addition to the digital VCR and so that the memory disc apparatus additionally comprises means for converting an analog signal into a digital signal to create an AV/subcode digital stream signal, means for generating an analog video signal using a digital signal reproduced from the memory disc, and other means, thereby enabling the edition of sounds and videos from either the digital or audio VCR.

The memory disc apparatus additionally comprises input means for inputting an audio and video analog signal from the external analog VCR, AV/subcode digital stream signal generation means controlled by the interface control means to generate an AV/subcode digital stream signal based on an audio and video analog signal from the input means, analog video signal generation means controlled by the interface control means to generate an audio and video analog signal using an AV/subcode digital stream signal reproduced from the memory disc, and output means for outputting an audio and video analog signal from the analog video signal generation means to the analog VCR.

An audio video recording and reproducing system according to a third aspect of the present invention comprises only the analog VCR as a video cassette recorder so as to edit sounds and videos from the analog VCR.

Accordingly, as in the memory disc apparatus of the audio video recording and reproducing system according to the second aspect, the memory disc apparatus is configured by means for inputting an external analog signal, AV/subcode digital stream signal generation means for generating a digital signal based on an analog signal, analog video signal generation means for generating an analog signal from an AV/subcode digital stream signal reproduced from the memory disc, and output means for outputting an analog signal to the analog VCR, which means are all specific to the analog VCR.

Furthermore, the memory disc apparatus requires the same components relating to the digital signal according to the first aspect in order to process digitized signals. The required components are a transducer for recording and reproducing an AV/subcode digital stream signal and a control signal, an actuator for allowing the transducer to trace tracks on the memory disc for recording or reproduction, transducer control means for controlling the movement speed and stationary position of the transducer, operation control input means for setting and inputting the movement speed and stationary position of the transducer to the transducer control means, disc interface means capable of allowing the transducer to divide all data into sectors formed on tracks and continuously recording or reproducing this data on or from the memory disc in the units of video signal frames, and interface control means for operating and controlling the bus and disc interface means using a control signal.

Next, the operation control input means of the audio video recording and reproducing system according to the present invention comprises a shuttle dial including a position control dial for the transducer so as to set the stationary position of the transducer based on the rotating angle of the position control dial.

In addition, the operation control input means comprises a shuttle dial including a position and a speed control dials for the transducer so as to set stationary position and movement speed of the transducer based on the rotating angles of the position and speed control dials, and comprises switching means for switching between the position and speed controls when a single control dial is used in common as said position control dial and said speed control dial.

In addition, this operation control input means comprises adjustment means capable of adjusting a full scale range of the position control dial or a small range of track width to be traced in order to enable the track positions to be set in detail, wherein when the track positions are set at both ends of the dial, the trace width is varied so that the still image reproduction position moves in this direction.

This operation control input means further comprises means including a jog dial having a click that moves a position relative to the transducer one frame so that when the jog dial is rotated clockwise, a still image is obtained that moves forward one frame per click and so that when the jog dial is rotated counterclockwise, a still image is obtained that moves backward one frame per click.

The above described configuration digitally records and reproduces audio and video information from the video cassette recorder connected to a memory disc apparatus, on and from a memory disc provided in the memory disc apparatus, and records the reproduced information on the video cassette recorder, which then reproduces an image. That is, this configuration records all or part of an AV/subcode digital stream signal based on the audio and video information, within a predetermined range of the memory disc through disc interface means. Subsequently, the operation control input means is used to change the settings of the movement speed and stationary position of a transducer which settings are used during tracing so that an AV/subcode digital stream signal reproduced from the memory disc by the transducer is transmitted through the disc interface means to the video cassette recorder for recording, while an analog audio video signal is applied to a monitor TV.

Thus, this configuration does not only enable a noiseless reproduced image and a noiseless still image in an arbitrary place to be obtained even during special reproduction at an arbitrary speed, but also significantly increases the speed enough to access a desired position, thereby enabling the signal for the desired position to be easily and speedily searched for for reproduction.

In addition, with respect to an audio video recording and reproducing apparatus adapted to use a memory disc to digitally edit audio and video information from a digital VCR connected to a memory disc apparatus with the memory disc through a single IEEE1394 bus standardized as a bus for audio and video digital stream signals, or from an analog VCR directly connected to the memory disc apparatus through analog I/O means, when this audio video recording and reproducing apparatus is used to edit sounds and videos from the digital or analog VCR using the memory disc apparatus, sounds and videos based on an AV/subcode digital stream signal loaded in the memory disc can be edited by simply operating operation control input means for enabling the unloading position and speed to be freely varied. In addition, the edited sounds and videos based on the AV/subcode digital stream signal can also be recorded for reproduction.

As a result, sounds and videos from the digital or analog VCR can be edited more inexpensively, efficiently, and easily than in the prior art, the edition speed can be increased, and image noise occurring in the edited image and during its reproduction can be reduced.

### Brief Description of the Drawings

FIG. 1 is a block diagram showing a configuration of an audio video recording and reproducing system according to Embodiment 1 of the present invention;
FIG. 2 is a block diagram showing a configuration of an audio video recording and reproducing system according to Embodiment 2 of the present invention; and
FIG. 3 is a block diagram showing a configuration of an audio video recording and reproducing system according to Embodiment 3 of the present invention.

### Description of the Embodiments

### (Embodiment 1)

An audio video recording and reproducing system according to Embodiment 1 of the present invention will be described.

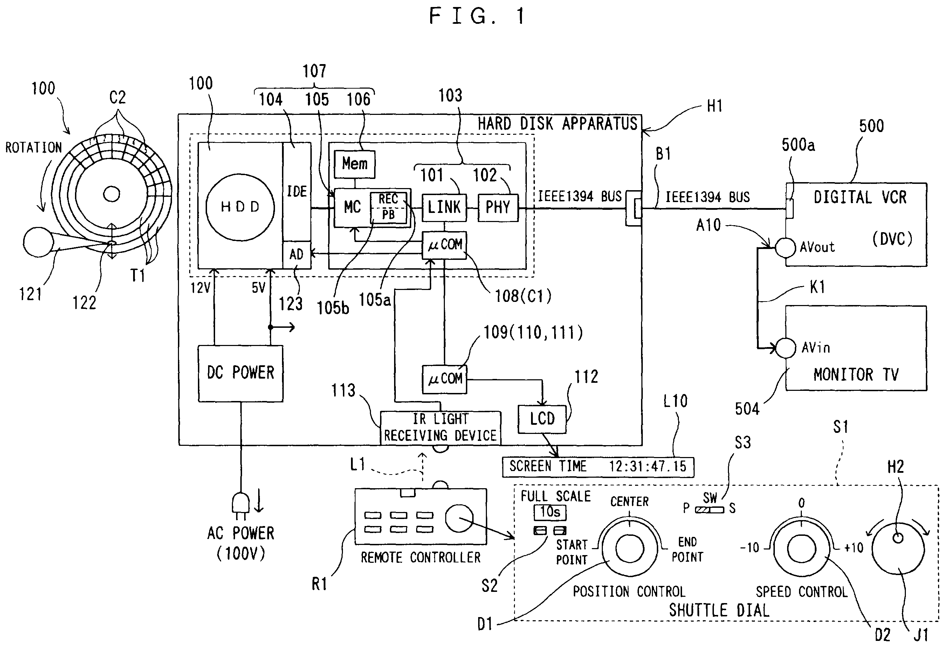

FIG. 1 is a block diagram showing a configuration of an audio video recording and reproducing system according to Embodiment 1 of the present invention. As shown in FIG. 1, the audio video recording and reproducing system essentially comprises a hard disc apparatus H1 that is a memory disc apparatus having a hard disc (HDD) 100 as a memory disc that is a recording medium; and a video cassette recorder (digital VCR 500) connected to the hard disc apparatus H1 so that the audio and video information from the digital VCR 500 is digitally recorded on and reproduced from the hard disc 100 and so that the reproduced information is recorded on the digital VCR 500, which then reproduces an image.

The digital VCR 500 digitally records and reproduces a digital stream signal corresponding to the audio and video information, and is connected to the hard disc apparatus H1 via an IEEE1394 bus that is a single stream bus standardized as a bus for the digital stream signal.

In FIG. 1, the digital VCR 500 comprises a bus interface (a DV terminal) 500a capable of using a specified method to input to and output from the IEEE1394 bus B1 all data corresponding to an AV/subcode digital stream signal consisting of DVC compressed audio and video digital stream signals output from the digital VCR 500 as an audio and video digital stream signal and a subcode digital stream signal including a time code and also corresponding to a control signal comprising a command for controlling the digital VCR 500 and a status signal for the digital VCR 500, and also comprises bus interface circuit (not shown) for data input and output carried out by the bus interface 500a.

On the other hand, the hard disc apparatus H1 comprises a transducer 122 for recording and reproducing an AV/subcode digital stream signal and a control signal on and from the hard disc 100, an actuator 121 for allowing the transducer 122 to trace tracks T1 on the hard disc 100 for recording or reproduction, and an actuator driver (AD) 123. The transducer 122 is controlled by transducer control means 108 (C1) for controlling the movement speed and stationary position of the transducer 122 while the actuator 121 is allowing the transducer 122 to execute tracing and by the actuator driver (AD) 123 for the transducer control means 108 (C1). Operation control input means S1 is also provided in a remote controller R1 to set and input the movement speed and stationary position of the transducer 122.

In addition, the hard disc apparatus H1 is directly connected to the IEEE1394 bus B1 to input to and output from the IEEE1394 bus B1 all data corresponding to an AV/subcode digital stream signal and a control signal using a specified method as described above, and includes bus interface means 103, disc interface means 107, and interface control means 108. The bus interface means 103 comprises a LINK 101 that is a higher-protocol data link layer for audio and video data stream signals and a PHY 102 that is a lower-protocol physical layer. In addition, the disc interface means 107 comprises a memory controller (MC) 105 having recording means (REC) 105a and reproducing means (PB) 105b for enabling all data corresponding to an AV/subcode digital stream signal and a control signal from the bus interface means 103 to be recorded on and reproduced from the hard disc 100 in the units of video signal frames that act to mediate between the hard disc 100 and the disc interface; a memory (Mem) 106 used for operations performed during recording on and reproduction from the hard disc 100; and an interface (IDE) 104 for transmitting signals between the memory controller 105 and the hard disc 100 during recording on and reproduction from the hard disc 100. The disc interface means 107 allows the transducer 122 to divide data into sectors C2 formed on tracks T1 and continuously records or reproduces this data on or from the hard disc 100 in the units of video signal frames. In addition, the interface control means 108 comprises a microcomputer (µCOM) for using the above control signal to operate and control the bus and disc interface means 103 and 107.

In addition, the hard disc apparatus H1 comprises in the microcomputer (µCOM) 109 controlled by the interface control means 108, time code detection means 110 for detecting and obtaining from a subcode digital stream signal time code corresponding to a screen time L10 of recording or reproduction, and time code memory means 111 for storing the time code from the time code detection means 110. An indicator (LCD) 112 for displaying the contents of the time code memory means 111 is connected to the microcomputer 109, and the microcomputer 109 comprises display control means 109 for controlling the indicator 112 to display the screen time L10 of recording or reproduction corresponding to the time code.

The hard disc apparatus H1 also comprises an IR light receiving device 113 for receiving light corresponding to operational commands (for example, infrared rays) from the remote controller R1 externally operated using keys.

The operation control input means S1 comprises a shuttle dial including a position control dial D1 and a speed control dial D2 provided in the remote controller R1 to control the position and speed of the transducer 122, respectively so that the stationary position and movement speed of the transducer 122 is set based on the rotating angles of the position and speed control dials D1 and D2. Further, when a single control dial is used in common as the position control dial D1 and the speed control dial D2, the operation control means S1 comprises switching means S3 for switching between position and speed controls using the shuttle dial.

In addition, the operation control input means S1 comprises adjustment means S2 capable of adjusting a full scale range of the position control dial D1 or a small range of track width to be traced in order to enable the track positions to be set in detail, wherein when the track positions are set at both ends of the dial D1, the still image reproduction position moves in this direction.

The operation control input means S1 also comprises a jog dial J1 having a click that moves the position relative to the transducer 122 one frame. The jog dial J1 can be clockwise and counterclockwise by, for example, inserting the finger into the hole H2, so that when the jog dial is rotated clockwise, a still image is obtained that moves forward one frame per click and so that when the jog dial is rotated counterclockwise, a still image is obtained that moves backward one frame per click.

An operation of the audio video recording and reproducing system configured as described above will be described below.

First, the interface control means 108 controls and operates the digital VCR 500 and the hard disc apparatus H1 to continuously record all or part of an AV/subcode digital stream signal from the digital VCR 500 within a predetermined range of the hard disc 100 through the IEEE1394 bus, the bus interface means 103, and the disc interface means 107.

Subsequently, the AV/subcode digital stream signal is reproduced from the hard disc 100. In this case, when the transducer 122 traces the hard disc 100, the rotating angle of the speed control dial D2 is adjusted by the operation control input means S1 to change the set movement speed of the transducer 122 to a desired speed and the rotating angle of the position control dial D1 is adjusted to change the set stationary position of the transducer 122 to a desired position so that the transducer 122 reproduces the hard disc 100 at that movement speed and at the new stationary position.

The reproduced AV/subcode digital stream signal is transmitted through the disc interface means 107, the bus interface means 103, and the IEEE1394 bus B1 to the digital VCR 500, where the signal is recorded. A VCR codec (not shown) having a decoder provided in the digital VCR 500 decodes the AV/subcode digital stream signal to convert it into an analog audio video signal, and applies this analog audio video signal to a monitor TV 504 through a connection cable K1 to obtain an image at an arbitrary speed and a still image at an arbitrary position of the hard disc 100.

### (Embodiment 2)

An audio video recording and reproducing system according to Embodiment 2 of the present invention will be described.

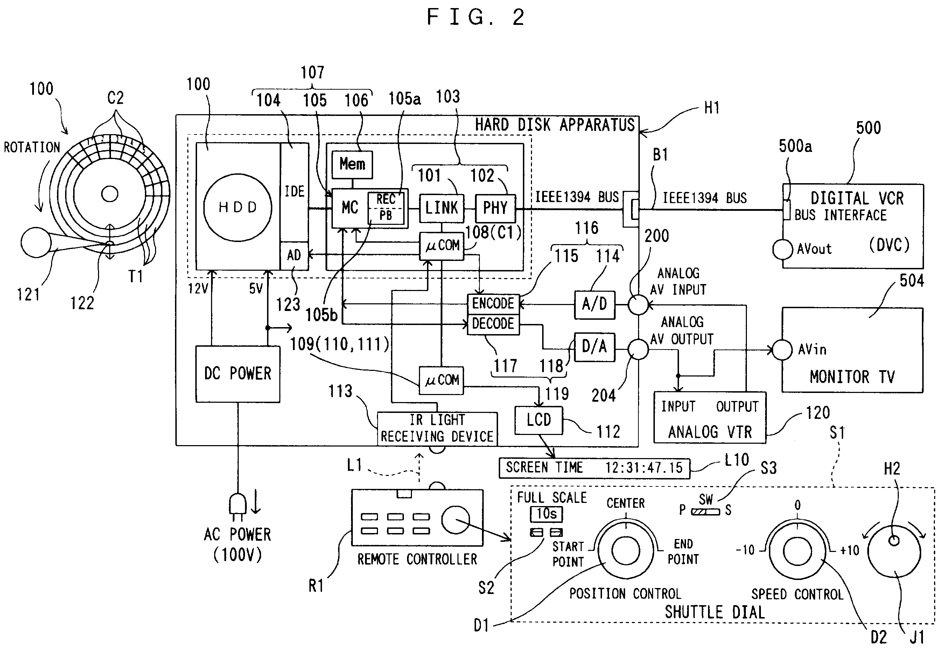

FIG. 2 is a block diagram showing a configuration of an audio video recording and reproducing system according to Embodiment 2 of the present invention. The detailed description of the same components as in Embodiment 1 is omitted, and only those arrangements different from those in Embodiment 1 are described.

As a video cassette recorder, this audio video recording and reproducing system comprises an analog VCR 120 connected thereto through an analog-signal connection cable as shown in FIG. 2 in order to record and reproduce an analog signal corresponding to audio and video information, in addition to the digital VCR 500 connected to the hard disc apparatus H1 via the IEEE1394 bus B1 shown in FIG. 1.

In addition, as shown in FIG. 2, the audio video recording and reproducing system further comprises input means 200, AV/subcode digital stream signal generation means 116, analog video signal generation means 119, and output means 204. The input means 200 is used to externally input an analog audio and video signal from the analog VCR 120. In addition, the AV/subcode digital stream signal generation means 116 uses an A/D converter (A/D) 114 to convert an audio and video analog signal from the input means 200 into a digital signal under the control of the interface control means 108. The AV/subcode digital stream signal generation means 116 then uses an encoder (ENCODE) 115 to generate the above AV/subcode digital stream signal from the digital signal under the control of the interface control means 108. In addition, the analog video signal generation means 119 uses a decoder (DECODE) 117 to decode an AV/subcode digital stream signal reproduced from the hard disc 100 under the control of the interface control means 108. The analog video signal generation means 119 then uses a D/A converter (D/A) 118 to generate an audio and video analog signal from the AV/subcode digital stream signal. Furthermore, the output means 204 outputs an audio and video analog signal from the analog video signal generation means 119 to the analog VCR.

An operation of the audio video recording and reproducing system configured as described above will be described below.

First, the interface control means 108 controls and operates the digital VCR 500, the analog VCR 120, and the hard disc apparatus H1 so that the AV/subcode digital stream generation means 116 converts an analog audio video signal obtained from the analog VCR 120 through the input means 200, into an AV/subcode digital stream signal. Then, all or part of the AV/subcode digital stream signal is continuously recorded within a predetermined range of the hard disc 100 through the disc interface means 107.

Subsequently, similarly as Embodiment 1, the operation control input means S1 is used to change the settings of the movement speed and stationary position of the transducer 122 used while the transducer is tracing the hard disc, and the transducer 122 reproduces the hard disc 100.

The reproduced AV/subcode digital stream signal is converted into an analog video signal through the disc interface means 107 and the analog video signal generation means 119, and this analog video signal is recorded on the analog VCR 120 via the output means 204 while being applied to the monitor TV 504. The monitor TV 504 can then provide an image at an arbitrary speed and a still image at an arbitrary position on the hard disc 100. The AV/subcode digital stream signal is recorded on the digital VCR 500 through the bus interface means 103 and the IEEE1394 bus B1.

This embodiment can use sounds and videos from either the digital VCR 500 connected to the hard disc apparatus H1 through the IEEE1394 bus B1 or the analog VCR 120 connected thereto through the input means 200 and the output means 204, as an audio and video information source in using the hard disc 100 for recording or reproduction. Data from the digital or analog VCR 500 or 120 can be recorded on the analog or digital VCR 120 or 500, from which the data can be reproduced.

In addition, when remote-controlled by the external remote controller R1 based on a light receiving signal corresponding to an operational command from the IR light receiving device 113, the interface control means 108 controls the indicator 112 through the display control means 109 and performs the above operations and controls based on the operational command from the remote controller R1.

### (Embodiment 3)

An audio video recording and reproducing system according to Embodiment 3 of the present invention will be described.

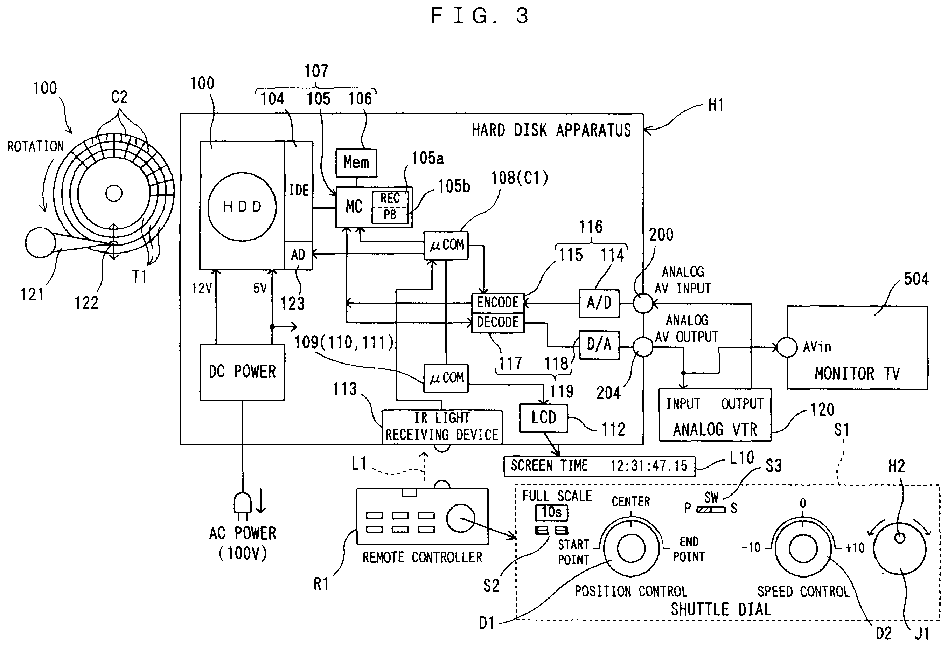

FIG. 3 is a block diagram showing a configuration of an audio video recording and reproducing system according to Embodiment 3 of the present invention. The detailed description of the same components as in the above embodiments is omitted.

In this audio video recording and reproducing system, as a video cassette recorder, the digital VCR 500 shown in FIGS. 1 and 2 is not connected to the hard disc apparatus H1, and only the analog VCR 120 is connected to the hard disc apparatus H1 via an analog-signal connection cable in order to record and reproduce an analog signal corresponding to audio and video information, as shown in FIG. 3.

Thus, the hard disc apparatus H1 does not have inside the IEEE1394 B1 for connection to the digital VCR 500 or the bus interface means 103 for directly interfacing audio and video stream signals with the IEEE1394 bus B1.

An operation of the audio video recording and reproducing system configured as described above will be described below.

First, the interface control means 108 controls and operates the analog VCR 120 and the hard disc apparatus H1 so that the AV/subcode digital stream generation means 116 converts an analog audio video signal obtained from the analog VCR 120 through the input means 200, into an AV/subcode digital stream signal. Then, all or part of the AV/subcode digital stream signal is continuously recorded within a predetermined range of the hard disc 100 through the disc interface means 107.

Subsequently, as in each of the above embodiments, the operation control input means S1 is used to change the settings of the movement speed and stationary position of the transducer 122 used while the transducer is tracing the hard disc, and the transducer 122 reproduces the hard disc 100.

The reproduced AV/subcode digital stream signal is converted into an analog video signal through the disc interface means 107 and the analog video signal generation means 119, and this analog video signal is recorded on the analog VCR 120 via the output means 204 while being applied to the monitor TV 504. The monitor TV 504 can then provide an image at an arbitrary speed and a still image at an arbitrary position on the hard disc 100.

In addition, when remote-controlled by the external remote controller R1 based on a light receiving signal corresponding to an operational command from the IR light receiving device 113, the interface control means 108 controls the indicator 112 through the display control means 109 and performs the above operations and controls based on the operational command from the remote controller R1.

According to each of the above embodiments, the operation control input means S1 in the remote controller R1 has the position and speed control dials D1 and D2 for the transducer 122. If only one control dial is used for both functions, the switching means S3 can switch this control dial.

Although each of the above embodiments has been described using as an example the configuration using the hard disc (HDD) 100 as a memory disc, this invention can be configured by using a CD-RAM or DVD-RAM that can be re-written as many times as desired to obtain similar effects and advantages.

In addition, although Embodiments 1 and 2 have been described using as an example the configuration using the IEEE1394 bus B1 as a stream bus, this invention can be configured by using another standard bus to obtain similar effects and advantages as long as the bus is similarly standardized for audio and video digital stream signals.

## Claims

1. An audio video recording and reproducing system comprising a memory disc apparatus (H1) having a memory disc (100) that is a recording medium and a video cassette recorder connected to the memory disc apparatus (H1), the system digitally recording and reproducing audio and video information from said video cassette recorder, on and from said memory disc (100) and recording the reproduced information on said video cassette recorder while reproducing an image from the video cassette recorder, wherein:
as said video cassette recorder (500), a digital VCR (500) is used that digitally records and reproduces a digital stream signal corresponding to said audio and video information and that is connected to the memory disc apparatus (H1) via a single stream bus (B1) standardized as a bus for the digital stream signal, and
said digital VCR (500) has a bus interface (500a) capable of using a specified method to input to and output from the stream bus (B1) all data corresponding to an AV/subcode digital stream signal as said digital stream signal consisting of DVC compressed audio and video digital stream signals output from the digital VCR (500) and a subcode digital stream signal including a time code and also corresponding to a control signal consisting of a command for controlling the digital VCR and a status signal for the digital VCR, and also has a bus interface circuit for data input and output carried out by the bus interface,
said memory disc apparatus (H1) comprising:
a transducer (122) for recording and reproducing said AV/subcode digital stream signal and control signal on and from the memory disc (100);
an actuator (121) for allowing said transducer (122) to trace tracks (T1) on said memory disc (100) for recording or reproduction;
transducer control means (108) for controlling the movement speed and stationary position of said transducer (122) while said actuator (121) is allowing said transducer (122) to execute tracing;
operation control input means (S1) for setting and inputting the movement speed and stationary position of said transducer (122) to said transducer control means (108);
bus interface means (103) directly connected to said stream bus (B1) for using said specified method to input to and output from the stream bus (B1) all data corresponding to said AV/subcode digital stream signal and control signal;
disc interface means (107) capable of allowing said transducer (122) to divide into sectors (C2) formed on said tracks (T1), all data corresponding to the AV/subcode digital stream signal and control signal from said bus interface means (103) to continuously record or reproduce this data on or from the memory disc (100) in the units of video signal frames; and
interface control means (108) for operating and controlling said bus interface means (103) and disc interface means (107) using said control signal,
said interface control means (108) controlling and operating said digital VCR (500) and memory disc apparatus (H1) to continuously record all or part of an AV/subcode digital stream signal from said digital VCR (500) within a predetermined range of said memory disc (100) through said stream bus (B1) and said bus interface means (103) and disc interface means (107),
said operation control input means (S1) being then used to change the settings of the movement speed and stationary position of said transducer (122) which settings are used during said tracing of the memory disc (100), said transducer control means (108) controlling the transducer (122) to reproduce said memory disc (100),
the resulting AV/subcode digital stream signal being transmitted through said disc interface means (107) and bus interface means (103) and said stream bus (B1) to said digital VCR (500), where the signal is recorded, so that a VCR codec having a decoder provided in said digital VCR (500) decodes said AV/subcode digital stream signal to convert it into an analog audio video signal, and
the analog audio video signal being applied to a monitor TV (504) to obtain an image at an arbitrary speed and a still image at an arbitrary position on the memory disc (100).

2. An audio video recording and reproducing system comprising a memory disc apparatus (H1) having a memory disc (100) that is a recording medium and a video cassette recorder connected to the memory disc apparatus (H1), the system digitally recording and reproducing audio and video information from said video cassette recorder, on and from said memory disc (100) and recording the reproduced information on said video cassette recorder while reproducing an image from the video cassette recorder, wherein:
as said video cassette recorder, the system uses a digital VCR (500) that digitally records and reproduces a digital stream signal corresponding to said audio and video information and that is connected to the memory disc apparatus (H1) via a single stream bus (B1) standardized as a bus for the digital stream signal, and an analog VCR (120) connected to said memory disc apparatus (H1) separately from said digital VCR (500) to record and reproduce an analog signal corresponding to said audio and video information, and
said digital VCR (500) has a bus interface (500a) capable of using a specified method to input to and output from the stream bus (B1) all data corresponding to an AV/subcode digital stream signal as said digital stream signal consisting of DVC compressed audio and video digital stream signals output from the digital VCR (500) and a subcode digital stream signal including a time code and also corresponding to a control signal consisting of a command for controlling the digital VCR and a status signal for the digital VCR, and also has a bus interface circuit for data input and output carried out by the bus interface (500a),
said memory disc apparatus (H1) comprising:
a transducer (122) for recording and reproducing said AV/subcode digital stream signal and control signal on and from the memory disc (100);
an actuator (121) for allowing said transducer (122) to trace tracks (T1) on said memory disc (100) for recording or reproduction;
transducer control means (108) for controlling the movement speed and stationary position of said transducer (122) while said actuator (121) is allowing said transducer (122) to execute tracing;
operation control input means (S1) for setting and inputting the movement speed and stationary position of said transducer (122) to said transducer control means (108);
bus interface means (103) directly connected to said stream bus (B1) for using said specified method to input to and output from the stream bus (B1) all data corresponding to said AV/subcode digital stream signal and control signal;
disc interface means (107) capable of allowing said transducer (122) to divide into sectors (C2) formed on said tracks (T1), all data corresponding to the AV/subcode digital stream signal and control signal from said bus interface means (103) to continuously record or reproduce this data on or from the memory disc in the units of video signal frames;
interface control means (108) for operating and controlling said bus interface means (103) and disc interface means (107) using said control signal;
input means (200) for inputting an audio and video analog signal from said external analog VCR (120);
AV/subcode digital stream signal generation means (116) controlled by said interface control means (108) to generate said AV/subcode digital stream signal based on an audio and video analog signal from said input means (200);
analog video signal generation means (119) controlled by said interface control means (118) to generate an audio and video analog signal using said AV/subcode digital stream signal reproduced from said memory disc (100); and
output means (204) for outputting an audio and video analog signal from said analog video signal generation means (119) to said analog VCR (120),
said interface control means (108) controlling and operating said digital VCR (500), analog VCR (120), and memory disc apparatus (H1) so that the AV/subcode digital stream generation means (116) converts an analog audio video signal obtained from said analog VCR (120) through said input means (200), into an AV/subcode digital stream signal, all or part of the AV/subcode digital stream signal being then continuously recorded within a predetermined range of said memory disc (100) through said disc interface means (107),
said operation control input means (S1) being then used to change the settings of the movement speed and stationary position of said transducer (122) which settings are used during said tracing of the memory disc (100), said transducer control means (108) controlling the transducer (122) to reproduce said memory disc (100),
the resulting AV/subcode digital stream signal being converted into an analog video signal through said disc interface means (107) and analog video signal generation means (119), the analog video signal being recorded on the analog VCR (120) from said input means (204) while being applied to the monitor TV (504), said AV/subcode digital stream signal being recorded on said digital VCR (500) through said bus interface means (103) and said stream bus (B1), said monitor TV (504) providing an image at an arbitrary speed and a still image at an arbitrary position on the memory disc (100).

3. An audio video recording and reproducing system comprising a memory disc apparatus (H1) having a memory disc (100) that is a recording medium and a video cassette recorder connected to the memory disc apparatus (H1), the system digitally recording and reproducing audio and video information from said video cassette recorder, on and from said memory disc (100) and recording the reproduced information on said video cassette recorder while reproducing an image from the video cassette recorder, wherein:
as said video cassette recorder, an analog VCR (120) is used that records and reproduces an analog signal corresponding to said audio and video information and that is connected to said memory disc apparatus (H1),
said memory disc apparatus (H1) comprising:
a transducer (122) for recording and reproducing said AV/subcode digital stream signal and control signal on and from the memory disc (100);
an actuator (121) for allowing said transducer (122) to trace tracks (T1) on said memory disc (100) for recording or reproduction;
transducer control means (C1) for controlling the movement speed and stationary position of said transducer (122) while said actuator (121) is allowing said transducer (122) to execute tracing;
operation control input means (S1) for setting and inputting the movement speed and stationary position of said transducer (122) to said transducer control means (C1);
interface control means (108) operated and controlled by operations from said operation control input means (S1);
input means (200) for inputting an audio and video analog signal from said external analog VCR (120);
AV/subcode digital stream signal generation means (116) controlled by said interface control means (108) to generate said AV/subcode digital stream signal based on an audio and video analog signal from said input means (200);
disc interface means (107) controlled by said interface control means (108) and capable of allowing said transducer (122) to divide into sectors (C2) formed on said tracks (T1), all data corresponding to the AV/subcode digital stream signal and control signal from said AV/subcode digital stream signal generation means (116) to continuously record or reproduce this data on or from the memory disc (100) in the units of video signal frames;
analog video signal generation means (119) controlled by said interface control means (118) to generate an audio and video analog signal using said AV/subcode digital stream signal reproduced from said memory disc (100) through said disc interface means (107); and
output means (204) for outputting an audio and video analog signal from said analog video signal generation means (119) to said analog VCR (120),
wherein said interface control means (108) controlling and operating said analog VCR (120) and memory disc apparatus (H1) so that the AV/subcode digital stream generation means (116) converts an analog audio video signal obtained from said analog VCR (120) through said input means (200), into an AV/subcode digital stream signal,
all or part of the AV/subcode digital stream signal being then continuously recorded within a predetermined range of said memory disc (100) through said disc interface means (107),
said operation control input means (S1) being then used to change the settings of the movement speed and stationary position of said transducer (122) which settings are used during said tracing of the memory disc (100), said transducer control means (108) controlling the transducer (122) to reproduce said memory disc (100), and
the resulting AV/subcode digital stream signal being converted into an analog video signal through said disc interface means (107) and analog video signal generation means (119), the analog video signal being recorded on the analog VCR (120) from said input means (204) while being applied to the monitor TV (504), said monitor TV (504) providing an image at an arbitrary speed and a still image at an arbitrary position on the memory disc (100).

4. The audio video recording and reproducing system according to any of claims 1 to 3, wherein the operation control input means (S1) comprises a shuttle dial including a position control dial (D1) for the transducer (122) so that the stationary position of said transducer (122) is set based on the rotating angle of said position control dial (D1).

5. The audio video recording and reproducing system according to any of claims 1 to 3, wherein the operation control input means (S1) comprises a shuttle dial including a position and a speed control dials (D1, D2) for the transducer (122) so that the stationary position and movement speed of said transducer (122) are set based on the rotating angles of said position and speed control dials (D1, D2), and wherein the operation control input means (S1) comprises switching means (S3) for switching between said position and speed controls when a single control dial is used in common as said position control dial (D1) and said speed control dial (D2).

6. The audio video recording and reproducing system according to claim 3, wherein the operation control input means (S1) comprises adjustment means (S2) capable of adjusting a full scale range of the position control dial (D1) or a small range of track width to be traced in order to enable the track positions to be set in detail, and wherein when the track positions are set at both ends of the dial, the trace width is varied so that the still image reproduction position moves in this direction.

7. An audio video recording and reproducing system according to any of Claims 1 to 3, wherein the operation control input means (S1) comprises means including a jog dial (J1) having a click that moves the position relative to the transducer (122) one frame so that when the jog dial is rotated clockwise, a still image is obtained that moves forward one frame per click and so that when the jog dial is rotated counterclockwise, a still image is obtained that moves backward one frame per click.
